# EUROPEAN PATENT APPLICATION

(11) **EP 1 813 173 A1**
(43) Date of publication of application: **01.08.2007**
(21) Application number: 07000047.6
(22) Date of filing: 03.01.2007
(51) Int. Cl.: A47J 31/30

(54) **Coffee maker for preparing infusions**

(30) Priority: 04.01.2006 IT VI20060003
(71) Applicant: FOREVER S.R.L., 28924 Fondotoce (Verbania) (IT)
(72) Inventor: Lanteri, Emanuele, 28921 Verbania (IT)
(74) Representative: Vannini, Mario

(57) **Abstract**

A coffee maker for preparing infusions from a granulate or powder product (C), such as ground coffee, comprising a lower boiler (2) for containing extraction water; an infusion receiving container (3) having a bottom wall (6) above the boiler (2); a basket (4) for containing the granulate or powder product (C) between the boiler (2) and the container (3), which defines an extraction chamber; a filter element (5) above the basket (4) for holding the product (C) within the basket (4); a tubular conduit (7) for conveying the infusion which extends from the bottom wall (6) above the filter element (5) and has an open upper edge (8); a diffuser (9) associated with the conduit (7) to define at least one infusion outlet (10,11) communicating with the container (3); characterized in that it comprises restriction means (12) to be associated to the upper edge (8) of the conduit (7) to cause a predetermined pressure and temperature increase in the extraction chamber so that a creamy phase is generated in the infusion The restriction means (12) include an elastic perforated membrane (13) associated to the diffuser (9).

## Description

### Field of the invention

The present invention finds application in the field of devices for preparing beverages by hot infusion, particularly for home coffee brewing.

### Background of the invention

Home coffee brewers, traditionally known as "moka" pots, are essentially comprised of a lower boiler in which brew water is poured, an upper cup-shaped reservoir in which hot infusion is collected and a perforated basket interposed between the boiler and the upper cup, in which ground coffee is introduced.

The side walls of the basket are extended from the perforated ground supporting plate to the bottom wall of the lower boiler by a conduit having the shape of a truncated cone or pyramid for allowing extraction water to come up to the powder.

In operation, once water has been poured in the lower boiler and the basket has been filled with ground coffee, the upper cup is tightly screwed on the lower boiler and the coffee maker is placed on a heat source.

Typically, the lower boiler is not completely filled with water, an air volume being left between the water surface and the upper wall of the boiler.

As water is heated, thereby causing steam production, and the air above it is also heated, pressure increases on the water surface: water is thus forced up the frustoconical conduit and through the ground coffee to reach the upper collection cup through a column which extends substantially to the upper edge of the beverage collecting cup.

During extraction, water temperature continuously increases until all water in the boiler is used.

The extraction pressure and speed are essentially regulated by pressure losses in the system, i.e, owing to the passage through the lower frustoconical conduit, the basket and the layer of ground coffee, and the upper column.

A typical Italian "moka" pot is characterized by 50 cm² of water per cup of brew, 5 grams of coffee per cup of brew, a water-to-air ratio from 1 to 2.3, an initial extraction temperature of about 40°C and a final extraction temperature of about 100°C and a brew temperature from 90°C to 95°C.

Apart from the type of coffee blend and roasting conditions, the taste and flavor of the coffee brew depend, on extraction temperature and pressure.

Particularly, the above classical conditions do not allow to obtain a creamy phase on the top, which is particularly appreciated by consumers, and requires higher extraction pressures, like those that can be reached by so-called "espresso" coffee machines.

Furthermore, the extraction process starts at rather low temperatures (about 40°C) which continuously increase during the process, wherefore certain tastes and flavors that can be only extracted at higher temperatures or in narrow temperature ranges cannot be obtained or enhanced.

In an attempt to obviate the above drawback, "moka" pots have been conceived which operate at higher pressure than ordinary traditional coffee makers, wherein such pressure increase, involving a corresponding temperature increase is obtained by introducing appropriate pressure losses in the extract path downstream from the ground coffee basket.

In a first solution of this type, pressure increase is obtained by a gravity valve, essentially consisting of a calibrated nozzle with a shut-off member of a predetermined weight.

When pressure within the system becomes equal to or slightly higher than the valve set pressure, the shut-off member pops up, thereby releasing the nozzle and allowing the brew to flow into the upper collection cup. Under these conditions, water passes through the layer of coffee at constant temperature and pressure, both regulated by setting the pressure valve and the water-to-air ratio in the boiler.

Oils extracted from the coffee by this device form a valued creamy finish on the top of the brew.

One drawback of the above solution is that the motion of the shut off member, and hence the valve opening pressure, are affected by system friction, which is essentially caused by the wear and cleaning state of the assembly.

A further drawback is that the opening of the shut-off member is greatly influenced by any offset from a perfectly vertical position thereof and by any vibration or shock that might cause uncontrolled opening.

A further drawback of this solution is that, for precision needs, the pressure valve, and particularly the calibrated nozzle thereof, are generally fixed, therefore they are not easily removable for cleaning, and tend to become encrusted, thereby causing a further increase of temperature and pressure above the desired values.

Another drawback is that the pressure valve, comprising the calibrated nozzle, the shut off member, the setting weight of the shut-off member, the sliding and retaining guide for the shut-off member is of complex and expensive construction.

According to another prior art solution, pressure regulation is obtained by means of an appropriately perforated elastic membrane, situated Immediately downstream from the ground holding filter in the ground coffee basket.

This membrane interposed between the ground coffee holding filter and the lower base of the collecting cup has a series of microholes which cause a considerable reduction of the free passage for the brew. Such reduction causes a pressure increase upstream from the membrane, which generates a greater thrust on the membrane, with bending and stretching thereof, and a consequent increase in pore section. Thus the pressure control system is self-regulated, and equalizes the temperature of water passing through the layer of coffee within a narrow range, thereby providing a beverage with a rich creamy phase.

One drawback of this known solution is that, once extraction is completed and all water in the boiler has passed through the mass of coffee, a liquid column of brew is still present above the membrane, extending to the top of the pot column.

As hot water and steam flow out of the micropores, they no longer exert a thrust action and bubble out through the liquid column. Therefore, the liquid over the membrane will stagnate even after production and pouring of coffee from the container.

Ordinary cleaning of the coffee brewer after use requires the upper cup to be separated from the lower boiler, the coffee holding basket to be emptied, and the parts to be rinsed in running water and air dried.

Therefore, the liquid above the membrane cannot be removed by ordinary cleaning, and the filter above the coffee holding basket, as well as the membrane, have to be also removed to prevent the formation of molds.

A further drawback is that, should the membrane holes be obstructed, a pressure of up to 4 bar, i.e. the setting pressure of the boiler safety valve, would build up in the lower part of the coffee brewer. In this case, if the coffee brewer is opened while it is still hot, by separating, as usual, the parts under pressure, hot liquid and steam may be abruptly released and cause burns to the user.

### Summary of the invention

The main object of this invention is to obviate the above drawbacks, by providing a "moka" coffee making pot of simple construction, that can perform extraction in a predetermined narrow temperature range, thereby forming a creamy layer.

A particular object is to provide a coffee maker that is easy to clean.

A further object of the invention is to provide a coffee maker that is fail safe against hot liquid and steam spills during ordinary opening operations.

Yet another object of the invention is to provide a coffee maker that can perform coffee extraction within predetermined differentiated temperature ranges.

These and other objects, as better explained hereinafter, are fulfilled by a coffee maker for preparing infusions from a granulate or powder product, such as ground coffee which, according to claim 1, comprises: - a lower boiler for containing extraction water; an infusion receiving container situated above said boiler, said container having a bottom wall; - a basket for containing the product (C) between said boiler and said container, which defines an extraction chamber: - a filter element above said basket for holding the product within said basket; - a tubular conduit for conveying the infusion which extends from said bottom wall above said filter element and has an open upper edge; - a diffuser associated with said conduit to define at least one infusion outlet communicating with said container; characterized in that it comprises restriction means to be associated to the upper edge of said conduit to cause a predetermined pressure and temperature increase in said extraction chamber so that a creamy phase is generated in the infusion.

This coffee maker allows to prepare infusions having a creamy finish in fail safe conditions.

Furthermore, the coffee maker can be quickly and easily cleaned by usual cleaning operations.

### Brief Description of the Drawings

Further features and advantages of the invention will be more apparent from the detailed description of one preferred but non-exclusive embodiment of a coffee maker according to the invention, which is described as a non-limiting example with the help of the annexed drawings, in which:
FIG. 1 is a sectional side view of a coffee maker according to the invention with the diffuser fixed in a first lower position, abutting against the upper edge of the tubular conduit;
FIG. 2 is a sectional side view of the coffee maker of FIG. 1, with the diffuser fixed in a second upper position separate from the upper edge;

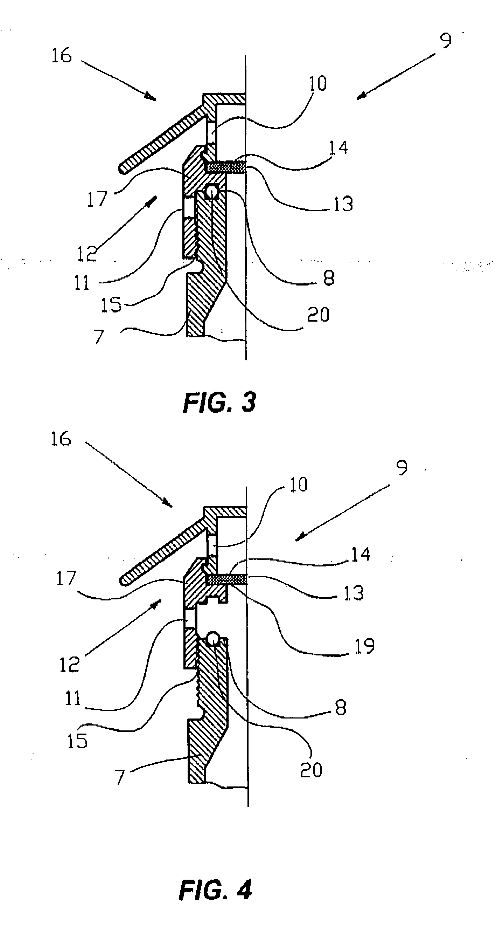

FIG. 3 is a sectional side view of the diffuser in the first lower abutment position;
FIG. 4 is a sectional side view of the diffuser in the second upper position.

### Detailed description of a preferred embodiment

Referring to the above figures, these show a "moka" coffee making pot for preparing infusions, e.g. coffee, operating at predetermined pressure and temperature, which is generally designated by numeral 1.

The coffee maker substantially comprises a lower boiler 2 for containing extraction water: an infusion container 3, generally having a cup shape, for receiving the infusion, which is situated above the boiler 2, and a basket 4 for containing the ground coffee C, between the boiler 2 and the cup-shaped container 3.

For the ground coffee to be held in the basket 4 during extraction, a filter element 5 is placed above it, i.e. fixed to the underside of the bottom wall 6 of the cup 3,

The cup-shaped container 3 further comprises a substantially tubular infusion inflow conduit 7 which extends from the bottom wall 6, above the filter element 5 to the top of the cup-shaped container 3.

The conduit 7 has an open upper edge 8, which is associated to a diffuser 9 with openings 10, 11 for pouring the infusion in the cup 3.

A peculiar feature of the invention is that restriction means 12 are provided, which can be associated to the open upper edge 8 of the conduit 7, which introduce one or more pressure losses along the path of the extract to increase extraction pressure and temperature to a predetermined value in the extraction chamber, to create a creamy phase in the infusion.

Particularly, such restriction means may be provided in the form of an elastic membrane 13 having a plurality of holes 14.

Conveniently, according to the invention, the perforated elastic membrane 13 is associated to the diffuser 9, which is secured to the upper edge 8 of the tubular conduit 7 by suitable user-operable connection means 15.

Furthermore, the connection means 15 are designed to selectively bring the membrane 13 to a lower position (A), abutting against the upper edge 8 of the conduit 7 to cause a pressure increase or to an upper position (B), in which the membrane 13 is separate from the upper edge 8 of the conduit 7 to allow the infusion to be discharged directly into the container 3 with no pressure or temperature increase in the extraction chamber and with no creamy phase production.

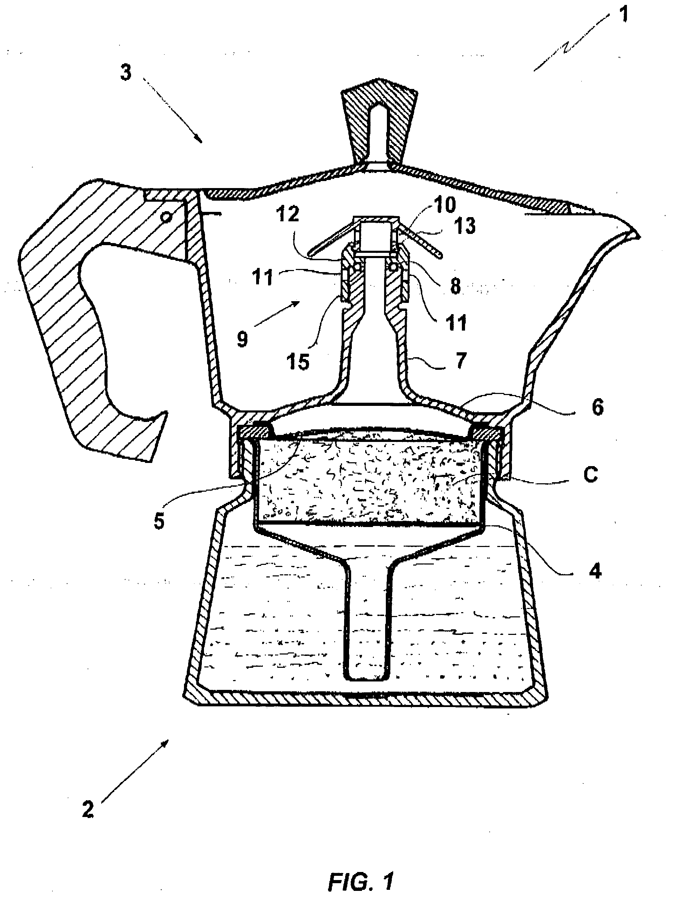

In the first position A, as shown in FIG. 1, the perforated elastic membrane 13 interposed in the infusion path allows to prepare an extract having a creamy phase at its top.

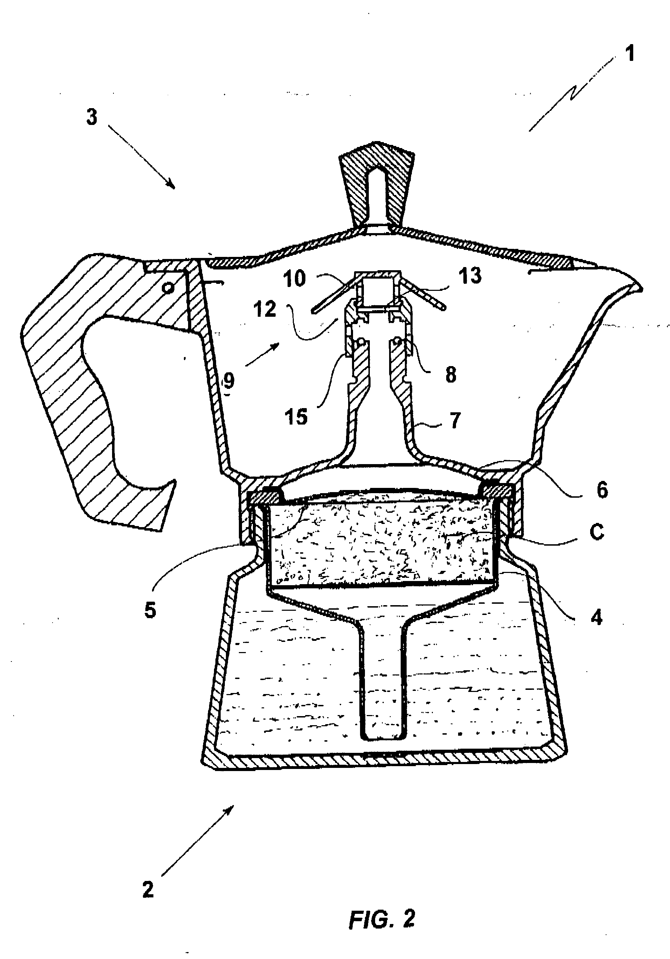

In the second position B, as shown in FIG. 2, in which the perforated elastic membrane is outside the infusion path, the beverage can be prepared with the traditional method without changing the coffee maker.

The diffuser 9 comprises an upper head 16 having one or more first holes 10 for diffusing and pouring the extract into the cup 3 and a tubular body 17, secured to the upper head 16, having connection means 15 and one or more second holes 11 for diffusing and pouring the extract into the cup 3.

In a preferred embodiment, the perforated elastic membrane 13 is interposed between the upper head 16 and the tubular body 17 in such a position that, in the lower position (A) the infusion is allowed to pass through it and come out of the first diffusion holes 10, and in the upper position (B) the infusion is deflected and led out the second holes 11.

Appropriately, the connection means 15 are of the nut and screw or bayonet type.

Advantageously, the upper head 16 and the tubular body 17 are mutually connected thereby defining a housing 19 for the perforated elastic membrane 13.

To ensure the sealing action of the perforated elastic membrane 13 in its lower position A, the housing 19 further comprises an O-ring 20 associated to the upper edge 8 of such conduit 7.

In operation, as the user tightens the connection means 15 for locking the diffuser 9 onto the upper edge 8 of the conduit 7 to the predetermined position corresponding to the lower position A, which is conveniently marked on the wall of the conduit 7, the membrane 13 safely seals the upper edge 8 of the conduit 7; extraction will occur at higher temperatures and pressures and a creamy layer will be formed.

On the other hand, by loosening the connection means 15 for locking the diffuser 9 onto the upper edge 8 of the conduit 7 to the predetermined position corresponding to the upper position B, which is conveniently marked on the wall of the conduit 7, the membrane 13 will be excluded and extraction will occur at lower temperatures and pressures with the traditional method.

In the lower position A, pressure tightness between the membrane 13 and the upper edge 7 is only ensured by the 0-ring 20.

The connection means 15 are not pressure-tight: thus, should the holes of the membrane 13 be obstructed or the infusion preparation process be early stopped, by manually loosening the means 15, pressure within the conduit 7 gradually decreases for allowing the hot liquid and steam to come out of the openings 19 without being projected all around.

A fail safe system is thus obtained.

The elastic membrane 13 may be made of a polymer or metal material.

According to a preferred embodiment, the polymer material is a silicone rubber having 3 to 10 holes, each having a diameter from 0.2 mm to 0.7 mm.

Under the pressure of the infusion, the elastic membrane 13 bends and the actual diameter of the holes increases, thereby reducing pressure.

Thus, the system is self-regulated to a predetermined pressure and temperature range, depending on the number and diameter of the holes, as well as the bending strength of the membrane 13.

According to a preferred embodiment, the pressure range is from 1 bar to 2.4 bar and the temperature range is from 75°C to 95°C.

Suitably, the diffuser 9, comprising the upper head 16, the lower body 17 and the elastic membrane 13, assembled together, may be supplied and sold as a spare part in case the membrane 13 becomes clogged.

Advantageously, the coffee maker 1 may be sold with a plurality of diffusers 9, each having a membrane 13 with different elastic and perforation characteristics, for producing infusions having different organoleptic properties, using the same coffee maker 1.

The coffee maker of this invention is susceptible of a number of changes and variants, within the inventive principle disclosed in the appended claims. All the details thereof may be replaced by other technically equivalent parts, and the materials may vary depending on different needs, without departure from the scope of the invention.

While the device has been described with particular reference to the accompanying figures, the numerals referred to in the disclosure and claims are only used for the sake of a better intelligibility of the invention and shall not be intended to limit the claimed scope in any manner.

## Claims

1. Coffee maker for preparing infusions from a granulate or powder product (C), such as ground coffee, comprising:
- a boiler (2) for containing extraction water;
- an infusion receiving container (3) located above said boiler (2), said container (3) having a bottom wall (6);
- a basket (4) for containing the product (C) between said boiler (2) and said container (3), which defines an extraction chamber;
- a filter element (5) above said basket (4) for holding the product within said basket;
- a tubular conduit (7) for conveying the infusion, which conduit extends from said bottom wall (6) above said filter element (5) and has an open upper edge (8);
- a diffuser (9) associated with said conduit to define at least one infusion outlet (10, 11) communicating with said container:
**characterized in that** it comprises restriction means (12) to be associated to the upper edge (8) of said conduit (7) to cause a predetermined pressure and temperature increase in said extraction chamber so that a creamy phase is generated in the infusion.

2. Coffee maker as claimed in claim 1, **characterized in that** said restriction means (12) comprise an elastic membrane (13) provided with holes (14).

3. Coffee maker as claimed in claim 2, **characterized in** said perforated elastic membrane (13) is associated with said diffuser (9).

4. Coffee maker as claimed in claim 3, **characterized in that** said diffuser (9) is secured to the upper edge (8) of said tubular conduit (7) by suitable user-operable connection means (15).

5. Coffee maker as claimed in claim 4, **characterized in that** said connection means (15) are designed to selectively locate said membrane (13) at a lower position (A), abutting against said upper edge (8) to cause a pressure increase and produce the creamy phase or at an upper position (B), separate from said upper edge (8) to allow the infusion to be discharged directly into the container (3) with no creamy phase production.

6. Coffee maker as claimed in claim 5, **characterized in that** said diffuser (9) comprises an upper head (16) having at least one first diffusion hole (10) and a tubular body (17) secured to said upper head (18) and having said connection means (15) as well as at least one second diffusion hole (11).

7. Coffee maker as claimed in claim 6, **characterized in that** said perforated elastic membrane (13) is interposed between said head (16) and said tubular body (17) so that, in said lower position (A) the infusion is allowed to pass through it and flow out of said at least one first diffusion hole (10), and so that in said upper position (B) the infusion is allowed to deflect and flow out through at least one second hole (11).

8. Coffee maker as claimed in claim 6, **characterized in** said connection means (15) are of the nut and screw or bayonet type.

9. Coffee maker as claimed in claim 7, **characterized in that** said head (16) and said body (17) are mutually coupled to define a housing (19) for said perforated elastic membrane (13).

10. Coffee maker as claimed in claim 9, **characterized in that** it comprises an O-ring (20) associated to the upper edge (8) of said conduit (7) to define a sealing surface for said perforated elastic membrane (13) in its lower position.

11. Coffee maker as claimed in any one of the preceding claims, **characterized in** said elastic membrane (13) is made of a plastic or metal material.

12. Coffee maker as claimed in claim 11, **characterized in that** said plastic material is silicone rubber.

13. Coffee maker as claimed in claim 2, **characterized in that** said holes (14) of said perforated elastic membrane (13) are so sized as to maintain said predetermined pressure and temperature from 1 bar to 2.4 bar and from 75 °C to 95°C respectively.

14. Coffee maker as claimed in claim 13, **characterized in that** said holes (14) are from 3 to 10 in number and each has a diameter from 0,2 mm to 0,7 mm depending on the type of infusion and of creamy phase to be produced.

15. Coffee maker as claimed in any one of the preceding claims, **characterized in that** said diffuser is unitarily formed with said membrane as a spare part or accessory of the coffee maker.
